# EUROPÄISCHE PATENTSCHRIFT

(11) **EP 0 513 950 B1**
(45) Veröffentlichungstag und Bekanntmachung des Hinweises auf die Patenterteilung: **05.07.1995**
(21) Anmeldenummer: 92250112.7
(22) Anmeldetag: 08.05.1992
(51) Int. Cl.: B65G 47/82

(54) **Ausschleusvorrichtung**
Distributing device
Dispositif de distribution

(30) Priorität: 16.05.1991 DE 4116323
(43) Veröffentlichungstag der Anmeldung: 19.11.1992
(73) Patentinhaber: MANNESMANN Aktiengesellschaft, 40027 Düsseldorf (DE)
(72) Erfinder: Aichholz, Klaus, W-6719 Bissersheim (DE); Ostholt, Rüdiger, W-5802 Wetter (DE)
(74) Vertreter: Meissner, Peter E., Dipl.-Ing.

(56) Entgegenhaltungen:
- DE-A- 1 431 848
- DE-A- 2 715 193
- DE-A- 3 241 100
- DE-A- 3 624 411
- DE-U- 7 033 841
- DE-U- 7 710 773
- US-A- 2 814 378
- US-A- 4 295 559

## Beschreibung

Die Erfindung betrifft eine Vorrichtung zum Abschieben von Stückgütern gemäß dem Oberbegriff des Patentanspruchs 1.

Aus der US-A-2 814 378 ist eine derartige Vorrichtung bekannt.

Hierbei ist die Anordnung der Umlenkrollen für die endlosen Zugmittel so gewählt, daß die Abschiebeleiste in Richtung auf das Förderband abgesenkt wird, sich dann schräg zur Förderbahn richtung bewegt, am Ende nach oben abgehoben und dann wieder schräg zurück bewegt wird.

Bei einer weiteren Ausschleusvorrichtung nach der DE 31 41 100 A1 wird jeweils ein Arm eines dreiarmigen Drehsterns in den Förderweg gedreht und das auszuschleusende Stückgut mit der Vorderkante zum Abförderer hin verschoben, so daß das Fördergut gedreht wird. Hierbei ist ein Abstand zwischen den Stückgütern erforderlich. Wenn das Stückgut vom Arm nicht an der vorderen Ecke erfaßt wird, was bei Stückgütern mit stark gerundeten Enden der Fall sein wird, wird das Stückgut auch nicht verdreht und stößt dann bei einer Parallelverschiebung direkt gegen eine Führungsrolle und wird von dieser angehalten. Die Führungsrolle kann wohl die vom Arm des Drehsterns eingeleitete starke Umlenkung vollenden, kaum aber eine eingeleitete Umlenkung weiterführen.

Die DE-A-36 24 411 zeigt einen Ausschleuser mit einem vierarmigen Drehstern. Da stets ein Arm in den Förderweg ragt ist, der Drehstern oberhalb des Stückgutes angeordnet und hat an den Armen nach unten herabklappbare Abschiebeplatten für das Stückgut. Die Abschiebeplatten drehen sich beim Drehen des Drehsterns relativ zu den Armen. Wenn das Stückgut nicht im Schwerpunkt bzw. Reibwiderstandszentrum erfaßt wird, kann sich das Stückgut unkontrolliert verkanten und nimmt auch die anschließenden Stückgüter mit auf die parallel zur ersten Förderbahn verlaufende Fördereinrichtung. Auch können sich die Abschiebeplatten ganz drehen und an den Stückgütern, die sich abschieben sollen, entlanggleiten. Durch den bogenförmigen Verlauf der Abschiebebewegung findet eine Relativbewegung zwischen dem Fördergut und der Abschiebeplatte statt.

Aufgabe der Erfindung ist es daher, eine Vorrichtung der eingangs genannten Art zu schaffen, die eine von beiden Enden an einem endlosen Zugmittel gekoppelte Abschiebeleiste aufweist, welche sich schräg zur Förderbahnrichtung bewegt und den Gütern eine zuverlässig kontrollierbare Bewegung bei hoher Abschiebeleistung verleiht.

Diese Aufgabe wird bei einer gattungsbildenden Vorrichtung mit den im Kennzeichen des Anspruchs 1 angegebenen Merkmalen gelöst.

Wenn z.B. eine Förderbahn einer Fluggepäck-Verteilanlage mit einer Geschwindigkeit von 1,3 m/s angetrieben wird und der durchschnittliche Abstand der Koffer zueinander ca. 1,5 m beträgt, können auf dieser Förderbahn in der Stunde ca. 3000 Koffer transportiert werden. Wenn die Abschiebeleiste das auszuschleusende Gepäck um ca. 60° aus der bisherigen Förderrichtung ablenkt und mit einer Geschwindigkeit von ca. 2,3 m/s über eine Förderbahnbreite von 850 mm schiebt, beträgt die Ausschleuszeit ca. 0,4 s.

Die Zeit zum Zuruckziehen der Ausschiebeleiste über die Förderbahn ist noch kürzer. Wegen der zwangsläufigen Parallelführung der Ausschiebeleiste erfolgt das Ausschleusen mit der erfindungsgemäßen Vorrichtung trotz hoher Geschwindigkeit auch dann absolut sicher, wenn das auszuschleusende Gepäckstück nicht mit dem Schwerpunkt von der Mitte der Ausschiebeleiste erfaßt wird.

Die Abschiebeleiste bewegt sich beim Zurückziehen rechtwinklig über den Bereich der Förderbahn und nach dem Passieren der Umleitrollen neben dem Förderbereich entgegen der Förderrichtung wieder über den Totpunkt hinaus zur Ausgangsstellung. Sie ist also nie bzw. kaum im Förderbereich auf Gegenkurs. Das bedeutet, das folgende Fördergut kann in der Zeit des Rückhubes schon um etwa die Entfernung von der Start-Umlenkrolle zur Umleitrolle weitergeleitet werden, ohne mit der Abschiebeleiste zu kollidieren. Die Umlenkrollen und Umleitrollen sind mit ihren Rollenachsen in Lageraufnahmerahmen eines an der Förderbahn befestigten, aus einem Anflanschträger, zwei Querträgern und einem Längsträger gebildeten Rahmens gelagert, wobei die Umleitrollen mittels Spannvorrichtungen verschiebbar in ihren Lageraufnahmerahmen an den Querträgern gelagert sind.

Die Mitnehmerzapfen der Zugglieder für die Abschiebeleiste sind zumindest im Ausschiebetrum mit Rollenlagern in Führungsschienen geführt und bestehen aus Lamellen-Zahnketten, wobei ein Verbindungsbolzen als Mitnehmerzapfen ausgebildet ist. Die beiden Aus-Umlenkrollen sind über Antriebszugglieder und Zahnräder mit einem gemeinsamen Ausschubantrieb in Form eines Motors mit Winkelgetriebe verbunden.

In weiterer Ausgestaltung der Erfindung ist die Abschiebeleiste Teil eines Rahmens, dessen der Abschiebeleiste gegenüberliegender Längsträger über einen Mitnehmerzapfen mit den Zuggliedern verbunden ist. Getragen wird dieser Rahmen an seiner Abschiebeleiste von einem neben der Förderbahn auf einer senkrechten Achse gelagerten Gelenkarm mit einem Traggelenk.

Ein Rusführungsbeispiel der Erfindung ist in den Zeichnungen dargestellt und im folgenden erläutert. Es zeigen:
- Figur 1: eine Draufsicht auf eine Ausschleusvorrichtung mit angedeuteter Förderbahn;
- Figur 2: den Schnitt II-II durch die Figur 1;
- Figur 3: eine Seitenansicht von Figur 2, in größerem Maßstab;
- Figur 4: den Schnitt IV-IV durch die Figur 1, in größerem Maßstab;
- Figur 5: den Schnitt V-V durch die Figur 1, in größerem Maßstab;
- Figur 6: den Schnitt VI-VI durch die Figur 1, in größerem Maßstab, um 90° in Arbeitsstellung gedreht.

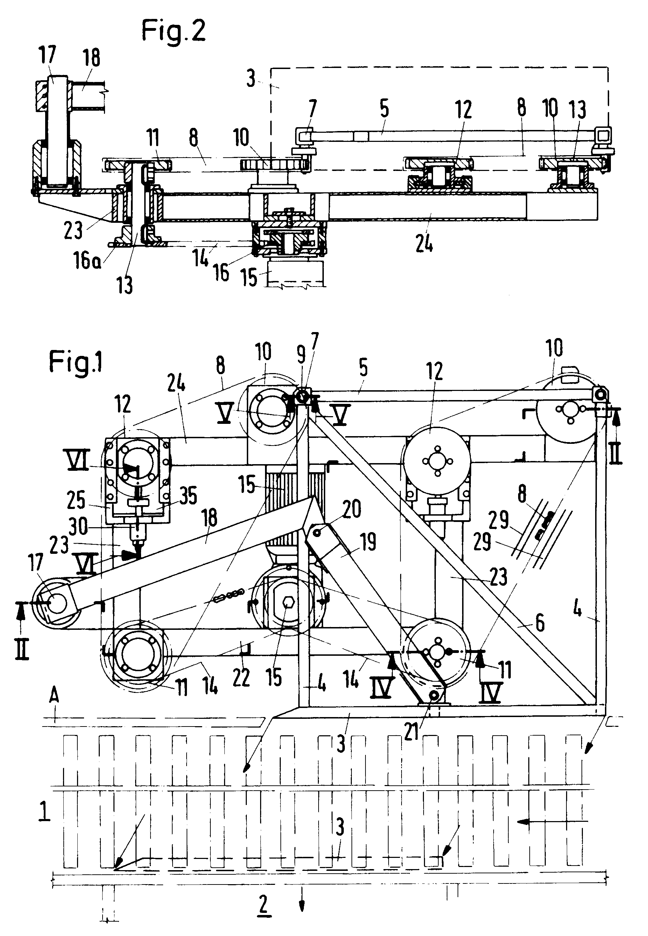

In Figur 1 ist die Förderbahn 1 eine Rollenbahn und durch strichpunktierte Linien angedeutet. Sie ist aus Platzgründen schmaler gezeichnet als eine übliche Rollenbahn; die Förderrichtung ist durch einen Pfeil angedeutet. Der an die Förderbahn 1 anschließende Abförderer 2 ist in der richtigen Breite angedeutet und kann eine Rollenbahn, ein Gurtförderer oder eine geneigte Rutsche sein. Zum Verschieben des auszuschleusenden Fördergutes wird eine Abschiebeleiste 3 etwa in einem Winkel Von 60° zur Förderrichtung über die Förderbahn 1 zum Abförderer 2 verschoben, wo die Abschiebeleiste 3 durch gestrichelte Linien angedeutet ist. In der gezeichneten Start-Position liegt die Abschiebeleiste 3 hinter der Seitenwange A der Förderbahn; am Wendepunkt lag sie kurzzeitig noch weiter zurück, was keinerlei Nachteile hat.

Die Abschiebeleiste 3 ist Teil eines aus zwei Querträgern 4 und einem weiteren Längsträger 5 gebildeten Rahmens, der durch eine Strebe 6 versteift ist. Der Rahmen hat in den Ecken zwischen den Querträgern 4 und dem Längsträger 5 Mitnehmeraugen 7 für Mitnehmerzapfen 9 von Zuggliedern 8, die den Rahmen an einer Seite tragen. An der anderen Seite ist seine Abschiebeleiste 3 über ein Traggelenk 21 mit einem Gelenkarm 19 verbunden, der über ein Armgelenk 20 nach Art eines Ellenbogengelenkes mit einem weiteren Gelenkarm 18 verbunden ist. Dieser ist über eine Achse 17 an einem Querträger 23 abgestützt.

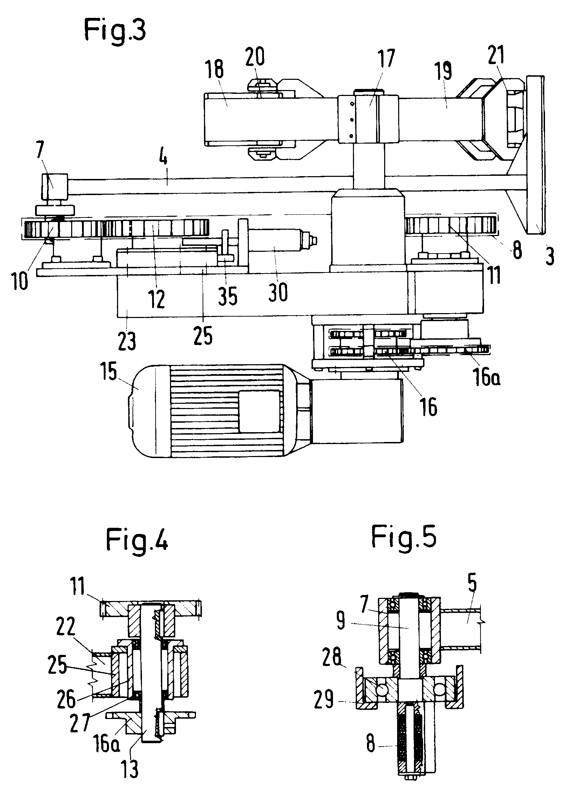

Die erwähnten Zugglieder 8 sind, wie in Figur 5 angedeutet, Lamellen-Zahnketten, bei denen jeweils ein Verbindungsbolzen als Mitnehmerzapfen 9 für den Rahmen mit der Abschiebeleiste 3 ausgebildet ist. Bei der Stellung der Ausschleusvorrichtung nach Figur 1 befindet sich die Abschiebeleiste 3 in der Wartestellung, in der sich die Mitnehmerzapfen 9 im Bereich der Start-Umlenkrollen 10 befinden. Beim Ausschieben des Fördergutes treibt ein Ausschubantrieb 15 in Form eines Motors mit Winkelgetriebe über seine übereinanderliegenden Zahnräder 16 und zwei Antriebszugglieder 14 die Zahnräder 16a, die über Roltenachsen 13 mit Aus-Umlenkrollen 11 in Nähe der Förderbahn 1 verbunden sind. Wenn die Zugglieder 8 mit ihren Mitnehmerzapfen 9 die Aus-Umlenkrollen 11 halb umrundet haben, ist der Ausschleusvorgang für das auszuschleusende Fördergut schräg über die Förderbahn 1 hinweg abgeschlossen und die Mitnehmerzapfen 9 gelangen in den Bereich von Umleitrollen 12. Die Abschiebeleiste 3 gelangt schnell aus dem Förderweg heraus und wird dann entsprechend der geometrischen Anordnung der Umleitrolle 12 zur Start-Umlenkrolle 10 wieder in Ausgangsposition gebracht.

Da die Abstände zwischen den Start-Umlenkrollen 10 und den Aus-Umlenkrollen 11 relativ groß ist und beim Ausschieben des Fördergutes auch Kräfte abgefangen werden müssen, sind die beiden Zugglieder 8 in diesem Ausschiebetrum mit Rollenlagern 28 in Führungsschienen 29 geführt, wie in Figur 5 gezeichnet und in Figur 1 auf der rechten Seite angedeutet.

Getragen wird die Ausschleusvorrichtung von einem an der Förderbahn 1 befestigten Anflanschträger 22, der über zwei Querträger 23 mit einem Längsträger 24 einen Rahmen bildet. Dieser hat an den Ecken zwischen dem Längsträger 24 und den beiden Querträgern 23 Lageraufnahmerahmen 25 mit Lagerbuchsen 26 für obere und untere Lager 27, durch die die Rollenachsen 13 geführt sind, wie Figur 4 und Figur 2 auf der linken Seite zeigen. Figur 2 zeigt auf der rechten Seite die einfachere Anordnung der Rollenachsen 13 für die Umlenkrollen 12 und Start-Umlenkrollen 10 am Längsträger 24.

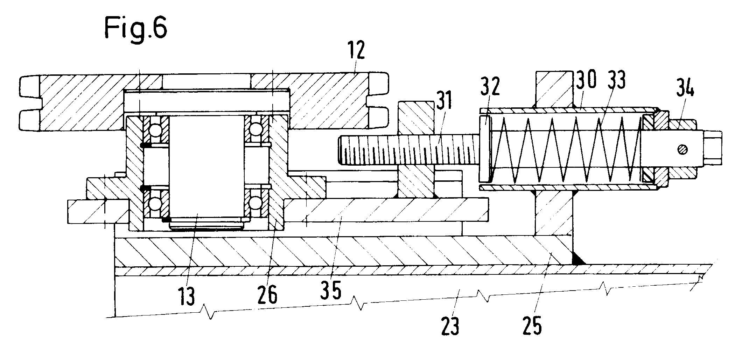

Die bereits erwähnten Lageraufnahmerahmen 25 sind mittels Spannvorrichtungen an den Querträgern 23 verschiebbar gelagert, wie auch Figur 6 zeigt. Der Lageraufnahmerahmen 25 ist auf dem Querträger 23 befestigt und hat als Spannvorrichtung ein eingeschweißtes Rohr 30 für die Aufnahme einer Gewindestange 31 mit einem Bund 32, der von einer sich am Rohrboden abstützenden Schraubenfeder 33 in Spannrichtung beaufschlagt wird. Die Gewindestange 31 verschiebt eine Führungsplatte 35 mit Lagerbuchse 26 für die Rollenachse 13 mit Umlenkrolle 12 im Lageraufnahmerahmen 25.

Ein Stellring 34 verhindert ein Herausspringen der Schraubenfeder 33 bei der Montage.

## Patentansprüche

1. Vorrichtung zum Abschieben von Stückgütern, die eine Abschiebeleiste (3) aufweist, welche an ihrem vorderen und hinteren Ende an je ein endloses Zugmittel (8) gekoppelt ist und welche sich während des Abschiebens der Güter von einer Förderbahn (1) auf einen Abförderer (2) schräg zur Förderbahnrichtung verschiebt sowie parallel zu einer Bezugslage bleibt, wobei ferner die Umlenkrollen (10-12) für die Zugmittel (8) ortsfest zur Förderbahn (1) angeordnet sind und die hinteren und vorderen Enden der Abschiebeleiste (3) jeweils zwangsläufig über Mitnehmerzapfen (9) mit dem zugehörigen Zugmittel (8) gekoppelt sind,
dadurch gekennzeichnet,
daß die Umlenkrollen ( 10-12) (mit ihren vertikalen Achsen) geometrisch in Form eines Dreieckes derart angeordnet sind, daß sich die Abschiebeleiste (3) während des Vorschubes schräg und beim Rückzug senkrecht zur Förderbahnrichtung bewegt.

2. Vorrichtung nach Anspruch 1,
dadurch gekennzeichnet,
daß die Umlenkrollen (10-12) mit ihren Rollenachsen (13) in einem Rahmen (25) gelagert sind, der aus einem Anflanschträger (22), zwei Querträgern (23) und einem Längsträger (24) besteht.

3. Vorrichtung nach Anspruch 2,
dadurch gekennzeichnet,
daß die beiden für den Leerhub dienenden Umlenkrollen (12) als Spannrolle jeweils mittels einer Spannvorrichtung im Rahmen (25) an den Querträgern (23) gelagert sind.

4. Vorrichtung nach Anspruch 3,
dadurch gekennzeichnet,
daß die Spannvorrichtung ein Rohr (30) umfaßt, an dessen Boden sich eine Schraubenfeder (33) abstützt, die über eine Gewindestange (31), eine Führungsplatte (35) sowie eine Lagebuchse (26) für die Achse (13) der Spannrollen (12) das Zugmittel (8) spannt.

5. Vorrichtung nach Anspruch 1,
dadurch gekennzeichnet,
daß die Drehgelenke (7) als Rollenlager (28) ausgebildet sind.

6. Vorrichtung nach einem der vorstehenden Ansprüche 1 bis 5,
dadurch gekennzeichnet,
daß die Zugmittel (8) Lamellen-Zahnketten sind, an denen durch Verbindungsbolzen ein Mitnehmerzapfen (9) zur Kopplung der Abschiebeleiste (3) angebracht ist.

7. Vorrichtung nach einem der vorstehenden Ansprüche 1 bis 6,
dadurch gekennzeichnet,
daß ein gemeinsamer Antrieb beide Zugmittel (8) antreibt.

8. Vorrichtung nach einem der vorstehenden Ansprüche 1 bis 7,
dadurch gekennzeichnet,
daß die Abschiebeleiste (3) von einem neben der Förderbahn (1) drehbar aber ortsfest gelagerten Zweischlag (18, 19) getragen wird.

9. Vorrichtung nach einem der vorstehenden Ansprüche 1 bis 8,
dadurch gekennzeichnet,
daß der Zweischlag (18, 19) über ein Drehgelenk mit der Abschiebeleiste (3) verbunden ist.

## Claims

1. A device for diverting packages, which comprises a pusher strip (3) which is coupled at each of its front and rear ends to an endless traction mechanism (8) and which moves at an angle to the conveyor direction during diversion of the packages from a conveyor (1) onto a remover (2) as well as remaining parallel to a reference position, the deflection rollers (10-12) for the traction mechanisms (8) additionally being arranged stationarily with respect to the conveyor (1) and the rear and front ends of the pusher strip (3) each being coupled of necessity with the associated traction mechanism (8) via driving pins (9), characterized in that the deflection rollers (10-12) are arranged (with their vertical axes) geometrically in the form of a triangle in such a way that during feed the pusher strip (3) moves obliquely and during the return movement perpendicularly to the conveyor direction.

2. A device according to claim 1, characterized in that the deflection rollers (10-12) are mounted with their roller axes (13) in a frame (25) which consists of a flange carrier (22), two transverse beams (23) and a longitudinal beam (24).

3. A device according to claim 2, characterized in that the two deflection rollers (12) effecting the return stroke are mounted as tension rollers in the frame (25) on the transverse beams (23) by means of a tension device.

4. A device according to claim 3, characterized in that the tension device comprises a tube (30), on the base of which there rests a helical spring (33) which tensions the traction mechanism via a threaded rod (31), a guide plate (35) as well as a bearing bush (26) for the axis (13) of the tension rollers (12).

5. A device according to claim 1, characterized in that the swivel joints (7) are constructed as roller bearings (28).

6. A device according to any one of preceding claims 1 to 5, characterized in that the traction mechanisms (8) are lamellar inverted tooth chains, to which a driver pin (9) is attached by connecting bolts for coupling of the pusher strip (3).

7. A device according to any one of preceding claims 1 to 6, characterized in that a common drive drives both traction mechanisms (8).

8. A device according to any one of preceding claims 1 to 7, characterized in that the pusher strip (3) is carried by a crank (18, 19) with coupling link, said crank (18, 19) being mounted next to the conveyor (1) rotatably or stationarily.

9. A device according to any one of preceding claims 1 to 8, characterized in that the crank (18, 19) with coupling link is connected with the pusher strip (3) via a swivel joint.

## Revendications

1. Dispositif pour transporter des marchandises de détail, qui présente une barre de poussée (3), laquelle est couplée, à son extrémité avant et à son extrémité arrière, à chaque fois, à un moyen de traction sans fin (8) et laquelle se déplace, pendant la poussée des marchandises, d'une voie de transport (1) sur un transporteur d'évacuation (2) de façon inclinée par rapport à la direction de la voie de transport, et demeure parallèle à une position de référence, les rouleaux de renvoi (10,12) pour les moyens de traction (8) étant de plus agencés de façon stationnaire par rapport à la voie de transport (1) et les extrémités avant et arrière de la barre de poussée (3) étant couplées à chaque fois de façon forcée, par l'intermédiaire de tourillons d'entraînement (9), avec le moyen de traction correspondant (8),
caractérisé en ce que les rouleaux de renvoi (10,12) (par leurs axes verticaux) sont agencés géométriquement sous forme d'un triangle de sorte que la barre de poussée (3), pendant l'avance, se déplace de façon inclinée par rapport à la direction de la voie de transport et, lors du retour, perpendiculairement à celle-ci.

2. Dispositif selon la revendication 1,
caractérisé en ce que les rouleaux de renvoi (10-12) sont montés, par leurs axes (13), dans un cadre (25) qui est constitué d'un support bridé (22), de deux supports transversaux (23) et d'un support longitudinal (24).

3. Dispositif selon la revendication 2,
caractérisé en ce que les deux rouleaux de renvoi (12) servant pour la course à vide sont montés, sous forme de rouleaux de tension, à chaque fois, au moyen d'un dispositif de tension, dans le cadre (25) sur les supports transversaux (23).

4. Dispositif selon la revendication 3,
caractérisé en ce que le dispositif de tension présente un tube (30) au fond duquel s'appuie un ressort à boudin (33) qui tend le moyen de traction (8) par l'intermédiaire d'une tige filetée (31), d'une plaque de guidage (35) ainsi que d'une douille (26) pour l'axe (13) des rouleaux de tension (12).

5. Dispositif selon la revendication 1,
caractérisé en ce que les charnières (7) sont réalisées sous forme de paliers à rouleaux (28).

6. Dispositif selon une des revendications précédentes 1 à 5,
caractérisé en ce que les moyens de traction (8) sont des chaînes dentées à lamelles, sur lesquelles est agencé un tourillon d'entraînement (9), par l'intermédiaire de boulons de liaison, pour le couplage de la barre de poussée (3).

7. Dispositif selon une des revendications précédentes 1 à 6,
caractérisé en ce qu'un entraînement commun entraîne les deux moyens de traction (8).

8. Dispositif selon une des revendications précédentes 1 à 7,
caractérisé en ce que la barre de poussée (3) est portée par un bras double (18,19) monté de façon rotative mais stationnaire à côté de la voie de transport (1).

9. Dispositif selon une des revendications précédentes 1 à 8,
caractérisé en ce que les bras (18,19) sont reliés par l'intermédiaire d'une charnière à la barre de poussée (3).
